# EUROPÄISCHE PATENTSCHRIFT

(11) **EP 4 233 024 B1**
(45) Veröffentlichungstag und Bekanntmachung des Hinweises auf die Patenterteilung: **14.10.2026**
(21) Anmeldenummer: 21800997.5
(22) Anmeldetag: 21.10.2021
(51) Int. Cl.: G08B 5/00, G06F 3/01, G06F 3/0346, G08B 25/01

(54) **SIGNALISIERUNGSVORRICHTUNG FÜR DIE ERZEUGUNG EINES LICHTSIGNALS BEIM FAHREN EINES FAHRZEUGS**
SIGNALLING DEVICE FOR THE GENERATION OF A LIGHT SIGNAL WHEN A VEHICLE IS MOVING
DISPOSITIF DE SIGNALISATION POUR LA PRODUCTION D'UN SIGNAL LUMINEUX LORS DE LA CONDUITE D'UN VÉHICULE

(30) Priorität: 22.10.2020 AT 2392020
(43) Veröffentlichungstag der Anmeldung: 30.08.2023
(73) Patentinhaber: Flasher GmbH, 8010 Graz (AT)
(72) Erfinder: Rech, Alexander, 8010 Graz (AT); Wöckl, Ines, 8010 Graz (AT)
(74) Vertreter: Mathys & Squire
(86) Internationale Anmeldenummer: PCT/AT2021/060392
(87) Internationale Veröffentlichungsnummer: WO 2022/082248

(56) Entgegenhaltungen:
- US-A1- 2015 366 275
- US-A1- 2018 242 658
- US-A1- 2018 304 800

## Beschreibung

Die vorliegende Erfindung betrifft eine Signalisierungsvorrichtung für die Erzeugung eines Lichtsignals beim Fahren eines Fahrzeugs, ein Signalisierungssystem, aufweisend wenigstens zwei solcher Signalisierungsvorrichtungen sowie ein Erkennungsverfahren für eine Erkennung einer Geste eines Oberarms eines Fahrers bei einer Nutzung einer solchen Signalisierungsvorrichtung.

Es ist bekannt, dass Fahrer von ungeschützten Fahrzeugen im Straßenverkehr durch Signalisierungen eine verbesserte Sicherheit erreichen können. Solche ungeschützten Fahrzeuge können beispielsweise Fahrräder, Inline-Skates, manuell betriebene Roller oder Elektroroller sein. Insbesondere handelt es sich dabei um Fahrzeuge, bei welchen der Fahrer ohne schützende Hülle direkt auf dem Fahrzeug sitzt oder steht und sich mit dem Fahrzeug bewegt. Die einfachste Lösung, beispielsweise Richtungswechsel anzuzeigen, ist dabei durch eine Anzeige des geplanten Richtungswechsels mit dem Arm. Hierfür muss der Fahrer jedoch den Lenker des Fahrzeugs loslassen und entsprechend den Arm zu der gewünschten Abbiegeseite ausstrecken. Dies führt zu einer reduzierten Sicherheit und insbesondere zu einer reduzierten Stabilität beim Fahren.

Es wurde auch vorgeschlagen Signalisierungsvorrichtungen an dem Fahrer anzubringen, welche in der Lage sind, ein Lichtsignal zur Signalisierung auszugeben. Solche Lichtsignale wurden insbesondere für die Signalisierung eines Abbiegewunsches und die Signalisierung eines starken Abbremsens vorgesehen. Nachteilhaft bei diesen Lösungen ist es jedoch, dass sie auch in unerwünschten Situationen das jeweilige Lichtsignal ausgeben. So muss entweder manuell, zum Beispiel durch das Drücken eines Knopfes, das gewünschte Lichtsignal ausgewählt und aktiviert werden. Alternativ ist es auch bekannt, dass bestimmte Gesten oder Bewegungen des Fahrers oder des Fahrzeugs das Lichtsignal auslösen. Jedoch ist hier die Sensitivität nicht ausreichend, sodass entweder die Geste nicht eindeutig genug als Signalisierungswunsch erkannt wird und dementsprechend das Aussenden des Lichtsignals in unerwünschter Weise nicht erfolgt. Auch ist es möglich, dass Gesten fälschlicher Weise erkannt werden, welche nicht als Gesten gemeint waren, sondern auf Basis normaler Fahrbewegungen, also Bewegungen des Fahrers während des normalen Fahrbetriebes des Fahrzeugs, als Gesten interpretiert werden. In einem solchen Fall würden Lichtsignale erzeugt, welche nicht ausgesendet werden sollen. Die Sensitivität nur dann ein Lichtsignal auszusenden, wenn dies vom Fahrer auch gewünscht wird, dann jedoch mit hoher Sicherheit, ist bei den bekannten Lösungen nicht gegeben. Dies führt zu einer reduzierten Akzeptanz bei Fahrern und darüber hinaus zu einer reduzierten Sicherheit bei der Benutzung solcher Signalisierungsvorrichtungen. Die US 2018/304800 A1 offenbart einen Stand der Technik, der als nächstliegend angesehen wird. Diese Druckschrift beschreibt eine Radbekleidung mit Abbiegesignalisierungssystem.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine Gestenerkennung für die Erzeugung eines Lichtsignals mit hoher Sensitivität zur Verfügung zu stellen.

Die voranstehende Aufgabe wird gelöst durch eine Signalisierungsvorrichtung mit den Merkmalen des Anspruchs 1, ein Signalisierungssystem mit den Merkmalen des Anspruchs 5 sowie ein Erkennungsverfahren mit den Merkmalen des Anspruchs 6 Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Signalisierungsvorrichtung beschrieben sind, selbstverständlich auch im Zusammenhang mit dem erfindungsgemäßen Signalisierungssystem sowie dem erfindungsgemäßen Erkennungsverfahren und jeweils umgekehrt, sodass bezüglich der Offenbarung zu den einzelnen Erfindungsaspekten stets wechselseitig Bezug genommen wird beziehungsweise werden kann.

Erfindungsgemäß dient eine Signalisierungsvorrichtung der Erzeugung eines Lichtsignals beim Fahren eines Fahrzeugs. Hierfür weist die Signalisierungsvorrichtung einen Befestigungsabschnitt für eine reversible Befestigung an einem Oberarm eines Fahrers des Fahrzeugs auf. Darüber hinaus ist die Signalisierungsvorrichtung mit einem Signalisierungselement mit einer Vielzahl von Signalisierungsmitteln zur Erzeugung des Lichtsignals ausgestattet. Die Signalisierungsvorrichtung weist weiter ein Kontrollmodul auf zur Kontrolle des Signalisierungselements mit wenigstens einem Sensorelement zur Erfassung von Gesten des Oberarms des Fahrers. Das Kontrollmodul ist darüber hinaus mit einem Unterscheidungselement ausgestattet für eine Unterscheidung der erkannten Gesten des Oberarms des Fahrers von Fahrbewegungen des Fahrers beim Fahren des Fahrzeugs, um eine gewollte Geste zu erkennen und anschließend das Lichtsignal auszugeben, **dadurch gekennzeichnet, dass** die Signalisierungsmittel wenigstens teilweise, insbesondere vollständig oder im Wesentlichen vollständig auf dem Befestigungsabschnitt angeordnet sind.

Ein erfindungsgemäßer Kerngedanke beruht darauf, die Sicherheit eines Fahrers beim Fahren eines Fahrzeugs zu erhöhen. In erfindungsgemäßer Weise ist unter einem Fahrzeug jedes Fahrzeug zu verstehen, auf welchem sich der Fahrer in ungeschützter oder gering beschützter Weise, insbesondere ohne Umhüllung, befindet. Dabei kann es sich zum Beispiel um Fahrräder, Roller, Inline-Skates, Elektroroller oder Ähnliches handeln. Selbstverständlich sind sowohl einspurige als auch mehrspurige Fahrzeuge in dieser Definition enthalten. Erfindungsgemäß ist die Signalisierungsvorrichtung mit einem Befestigungsabschnitt ausgestattet. Dieser erlaubt es in reversibler Weise die Signalisierungsvorrichtung am Oberarm des Fahrers zu befestigen. Insbesondere erfolgt diese Befestigung in definiert ausgerichteter Weise, indem beispielsweise der Befestigungsabschnitt relativ zum Oberarm eine Positionierungshilfe aufweist. Ist beispielsweise der Befestigungsabschnitt, wie dies später noch erläutert wird, als Schnappbefestigung ausgestaltet, so kann diese Schnappbefestigung im Wesentlichen nur in einer einzigen Art und Weise mit einer entsprechend einzigen Ausrichtung, am Oberarm des Fahrers befestigt werden. Jedoch sind grundsätzlich auch andere Befestigungsmechanismen für den Befestigungsabschnitt im Rahmen der vorliegenden Erfindung denkbar.

Befindet sich nun die Signalisierungsvorrichtung am Oberarm des Fahrers in der befestigten Position, so können mithilfe des wenigstens einen Sensorelementes ein oder mehrere Bewegungen des Oberarms des Fahrers oder des gesamten Fahrers erkannt werden. Solche Sensorelemente, wie sie später noch näher erläutert werden, weisen insbesondere Beschleunigungssensoren und/oder Gyrosensoren auf. Diese sind in der Lage Beschleunigungsparameter und/oder Gyroparameter für entsprechende Bewegungen in die einzelnen Achsen zu zerlegen und dann anschließend, beispielsweise durch den Vergleich mit entsprechenden Grenzwerten, einer Geste zuzuordnen oder nicht. Mit anderen Worten ist es nun möglich, dass der Fahrer beim Fahren des Fahrzeugs den Oberarm in einer festgelegten Art und Weise bewegt, beispielsweise unter Beibehaltung des Griffs am Lenker. So ist zum Beispiel für das Anzeigen eines Abbiegewunsches ein nach außen Bewegen des Ellenbogens des Fahrers in die gewünschte Abbiegerichtung möglich. Dieses nach außen Bewegen kann als Geste durch die entsprechenden Sensorelemente wahrgenommen werden, sodass anschließend das Lichtsignal, beispielsweise in Form eines Abbiegeblinkers, erzeugt und über die Signalisierungsmittel ausgegeben wird. Die Beendigung dieses Lichtsignals kann entweder zeitbasiert, automatisch oder ebenfalls gestenbasiert, durch eine entsprechende Ausschaltgeste, erfolgen.

Ein erfindungsgemäßer Kerngedanke liegt nun darin, dass neben der Gestenerkennung im Kontrollmodul ein Unterscheidungselement einen zusätzlichen Verfahrensschritt im Rahmen eines erfindungsgemäßen Erkennungsverfahrens durchführen kann. Hierfür ist die Signalisierungsvorrichtung im Kontrollmodul mit dem Unterscheidungselement ausgestattet, welches auf Basis entsprechender Positionsparameter, Unterscheidungsfilter und/oder Gewichtungsparameter, wie dies später noch erläutert wird, die eingegangenen Bewegungsparameter im Vergleich zu normalen Fahrbewegungen des Fahrers interpretiert und insbesondere ein Unterscheidungskriterium zur Verfügung stellen kann. Das Unterscheidungselement ist also in der Lage, normale Fahrbewegungen als solche zu erkennen und sicherzustellen, dass diese nicht als Gesten missinterpretiert werden. Mit anderen Worten ist nun eine erfindungsgemäße Signalisierungsvorrichtung in der Lage, mit hoher Sensitivität eine Geste als eine gewollte Geste zu erkennen und anschließend das Lichtsignal auszugeben. Darüber hinaus ist jedoch mit Hilfe des Unterscheidungselementes eine Unterscheidungsmöglichkeit gegeben, eine gewollte Geste von einer ungewollten Geste, welche zum Beispiel durch eine entsprechende Fahrsituation und eine ausgleichende Fahrbewegung des Fahrers ausgeführt worden ist, als unerwünscht zu definieren und entsprechend ein Lichtsignal nicht auszugeben beziehungsweise zu unterdrücken.

Das Unterscheidungselement kann beispielsweise als Vergleichselement ausgebildet sein und in einem erfindungsgemäßen Erkennungsverfahren den Schritt des Vergleichs der erfassten Bewegungsparameter mit Signalisierungsgrenzwerten durchführen. Mit anderen Worten wird die Funktionalität der Unterscheidung dadurch erzielt, dass eine Bewertung und/oder eine Interpretation der erfassten Bewegungsparameter durchgeführt wird. Im einfachsten Fall kann es sich dabei um den Vergleich von Parametern handeln. Allerdings sind auch selbstverständlich auch komplexere Zusammenhänge, der Einsatz von Kennfeldern und/oder einer künstlichen Intelligenz denkbar. Damit kann durch das Sensorelement eine Geste auf Basis der Bewegungsparameter erkannt werden und, durch eine Bewertung der dieser Erkennung zugrunde liegenden Parameter, eine solche Geste von Fahrbewegungen, welche durch Einflüsse bei der normalen Bewegung beim Fahren des Fahrzeugs entstehen, unterschieden werden. Das Unterscheidungsmodul kann softwarebasiert und/oder als physische Einheit in das Kontrollmodul integriert sein.

Weiter kann das Unterscheidungselement ein Kalibriermittel aufweisen für ein adaptives Kalibrieren der Unterscheidungsfunktion. Hierfür kann das Kalibriermittel und/oder ein separater Positionierungssensor wenigstens einen Positionierungsparameter erfassen, um beispielsweise zu erkennen, ob die Signalisierungsvorrichtung an einem rechten oder einem linken Oberarm angeordnet ist. Die adaptive Kalibrierung kann einzelne Unterscheidungskriterien anpassen, beispielsweise unterschiedlich stark gewichten oder den unterschiedlichen Achsen unterschiedliche Signalisierungsgrenzwerte zuordnen. Damit kann die Funktionssicherheit der Signalisierungsvorrichtung verbessert werden, insbesondere in möglichst vielen unterschiedlichen Positionierungen am Fahrer.

Es ist zusammenzufassen, dass im Vergleich zu den bekannten Signalisierungsvorrichtungen nun eine erfindungsgemäße Signalisierungsvorrichtung in der Lage ist, eine Unterscheidung zwischen unerwünschten Gesten in Form von Fahrbewegungen und erwünschten Gesten durchzuführen. Im Ergebnis führt dies dazu, dass die Korrektheit des erzeugten Lichtsignals im Vergleich zu den bekannten Lösungen deutlich gesteigert wird, da nur dann ein Lichtsignal erzeugt wird, wenn auch eine korrekte und gewünschte Geste erkannt worden ist. Unerwünschte Gesten führen im Gegensatz zu bekannten Lösungen damit nicht zur Aussendung des jeweiligen Lichtsignals.

Unter einer Vielzahl von Signalisierungsmitteln ist auch eine Verteilung von Licht aus einer einzigen oder von wenigen Lichtquellen, beispielsweise mittels Lichtleitern, denkbar. Die Signalisierungsmittel können also für eine direkte Lichtaussendung und/oder für eine indirekte Lichtaussendung ausgebildet sein.

Unter einer Eignung für eine reversible Befestigung am Oberarm ist im Rahmen der vorliegenden Erfindung auch eine Befestigung an anderen Körperteilen des Fahrers zu verstehen, insbesondere am Unterarm und/oder im Schulterbereich des Fahrers. Grundsätzlich ist auch eine Befestigung an den Beinen denkbar, wobei jedoch die erfindungsgemäßen Vorteile bei einer Befestigung am Arm des Fahrers überwiegen.

Ein solches Lichtsignal kann beispielsweise ein Abbiegehinweis in Form eines Blinklichts sein. Auch ist ein Lichtsignal in Form eines Bremssignals denkbar, welches beispielsweise als rotes Dauersignal ausgebildet sein kann.

Es kann Vorteile mit sich bringen, wenn bei einer erfindungsgemäßen Signalisierungsvorrichtung der Befestigungsabschnitt wenigstens abschnittsweise als federnde Schnappbefestigung ausgebildet ist. Ein solcher Befestigungsabschnitt kann auch als Schnappband bezeichnet werden und ist insbesondere entlang seiner Längserstreckung bandförmig ausgebildet. Durch eine leicht gebogene oder gekrümmte Ausgestaltung kann in der gestreckten Position eine Vorspannung eingenommen werden, welche nach dem Lösen die Vorspannkraft freigibt, sodass die Vorspannkraft als Befestigungskraft dieses Schnappband einrollt und dieses einen dazwischen angeordneten Oberarm des Fahrers umgeben kann. Diese Federkraft des Schnappbandes im Befestigungsabschnitt dient dazu, anschließend als Haltekraft den Befestigungsabschnitt und damit die gesamte Signalisierungsvorrichtung in der gewünschten Position am Oberarm zu halten. Eine solche Schnappbefestigung erlaubt es, dass eine manuelle Fixierung, wie beispielsweise bei der Verwendung von Klettverschlüssen oder Ähnlichem, unterbleiben kann. Darüber hinaus ist eine solche Befestigungsmöglichkeit unabhängig von einem Gegenbefestigungsabschnitt, sodass eine Befestigung an jeder beliebigen Oberfläche des Oberarms, wie auch am nackten Oberarm des Fahrers, erfolgen kann. Die Flexibilität im Einsatz einer solchen Signalisierungsvorrichtung wird auf diese Weise deutlich gesteigert. Nicht zuletzt wird auf diese Weise eine automatische Anpassung an den entsprechenden Umfang des Oberarms möglich, sodass auch bei unterschiedlichen anatomischen Verhältnissen des Oberarms eine sichere Befestigung in einfacher Weise ausgebildet werden kann. Dabei ist noch darauf hinzuweisen, dass eine solche flexible Schnappbandausgestaltung des Befestigungsabschnitts vorzugweise mit einem starren Abschnitt für das Kontrollmodul kombiniert ist, welches beispielsweise an einem Ende eines solchen Schnappbandes angeordnet sein kann.

Vorteile bringt es mit sich, wenn bei einer erfindungsgemäßen Signalisierungsvorrichtung das Kontrollmodul an einem Ende des Befestigungsabschnitts angeordnet ist. Damit ist das Kontrollmodul separat vom Befestigungsabschnitt ausgebildet und kann zum Beispiel von einem starren Gehäuse umgegeben sein. Dies ist insbesondere in Kombination mit einem Schnappband als Befestigungsabschnitt gemäß dem voranstehenden Absatz kombiniert. Eine Anordnung an einem Ende der Signalisierungsvorrichtung und damit die Ausbildung dieses Endes der Signalisierungsvorrichtung führt darüber hinaus dazu, dass nur eine einseitige Anbindung an den Befestigungsabschnitt notwendig wird. Dies führt insbesondere auch zu einer erleichterten Verkabelung, welche es erlaubt die Versorgung mit Strom und die Kommunikation zwischen dem Kontrollmodul und den Signalisierungsmitteln nur auf einer Seite des Kontrollmoduls anschließen zu müssen. Weiter ist es auch möglich, dass das Kontrollmodul einen äußeren Greifabschnitt, insbesondere einen Gehäuse-Greifabschnitt, aufweist, welcher es erlaubt die Signalisierungsvorrichtung in einer Befestigungsbewegung so um den Oberarm zu bewegen, dass die gewünschte definierte Position für die Signalisierungsvorrichtung eingenommen wird. Nicht zuletzt wird bei einer solchen Ausgestaltung sich der Befestigungsabschnitt zumindest teilweise über das Kontrollmodul bewegen, um das Kontrollmodul eng anliegend am Oberarm des Fahrers zu halten. Insbesondere bringt dies Vorteile mit sich, wenn, wie dies später noch erläutert wird, im Kontrollmodul zusätzlich ein Vibrationselement angeordnet ist, welches in direktem Kontakt mit dem Oberarm des Fahrers ein haptisches Feedback in Form eines Vibrationssignals an den Fahrer ausgeben kann. Neben einer Ausgabe als Vibrationssignal ist auch eine Ausgabe als akustisches Signal denkbar. Erfindungsgemäß sind die Signalisierungsmittel der Signalisierungsvorrichtung wenigstens teilweise, insbesondere vollständig oder im Wesentlichen vollständig, auf dem Befestigungsabschnitt angeordnet. Darunter ist zu verstehen, dass der Befestigungsabschnitt eine Doppelfunktion einnimmt, also neben der Befestigungsfunktion auch die Signalisierungsfunktion zur Verfügung stellt. Dadurch, dass bei einer Rundumbefestigung um den Oberarm des Fahrers die geometrische Erstreckung des Befestigungsabschnitts im Wesentlichen dem sinnvollen Anordnungsabschnitt für die Signalisierungsmittel entspricht, kann auf diese Weise die Erstreckung der Signalisierungsvorrichtung, deren Gewicht und Kosten durch diese Doppelfunktionalität reduziert werden. Diese Signalisierungsmittel sind vorzugsweise reihenförmig beziehungsweise matrixförmig auf dem Befestigungsabschnitt angeordnet und können beispielsweise als LEDs ausgebildet sein. Selbstverständlich können jedoch zusätzlich oder alternativ auch im Bereich des Kontrollmoduls entsprechende Signalisierungsmittel angeordnet sein. Um eine Signalisierung in Form des Lichtsignals noch weiter zu verbessern, kann es auch möglich sein, auf dem Befestigungsabschnitt eine entsprechende Zwischenschicht anzuordnen, welche als eigenständige Reflexionsschicht die Sicherheit für den Fahrer erhöht. Auch eine Reflexionsschicht als Zwischenschicht für eine zusätzliche Reflexion der Signalisierungsmittel erhöht die Signalisierungswirkung und damit die Sicherheitsfunktion des Lichtsignals weiter. Neben einer Ausbildung in Form von LEDs ist auch der Einsatz von indirekten Signalisierungsmitteln denkbar. So ist beispielsweise der Einsatz von Lichtleitern möglich, welche insbesondere eine gestreute Verteilung von Licht einer oder mehrere Lichtquellen erlauben. Beispielsweise kann Licht von einer oder wenigen Lichtquellen über solche Lichtleiter an definierte Ausgabepositionen geführt werden, so dass die Anzahl der Lichtquellen reduzierte werden kann.

Vorteilhaft ist es darüber hinaus, wenn bei einer erfindungsgemäßen Signalisierungsvorrichtung das Kontrollmodul wenigstens zwei Schalter aufweist, welche vorzugsweise auf zwei entgegengesetzt ausgerichteten Seiten des Kontrollmoduls angeordnet sind. Bei diesen Schaltungen handelt es sich vorzugsweise um Schalter zum Einschalten und/oder zum Ausschalten des Kontrollmoduls. Sie dienen dazu beim Befestigen am Oberarm oder vor/nach dem Befestigen am Oberarm gedrückt zu werden, um damit das Kontrollmodul und das später noch erläuterte Erkennungsverfahren zu aktivieren. Bevorzugt sind diese Schalter auf der Oberseite und der Unterseite bezogen auf die Befestigungsposition am Oberarm der Signalisierungsvorrichtung angeordnet, sodass sie beim entsprechenden Greifen für die Befestigungsbewegung im Wesentlichen automatisch durch den Fahrer gedrückt werden. Dies führt zu einer weiteren Erhöhung der Sicherheit, da bei der Befestigungsbewegung eine definierte und vor allem voraussagbare Relativpositionierung der Signalisierungsvorrichtung zum Oberarm erfolgen kann. Diese Schalter können durch eine entsprechende Hülle, insbesondere in Form einer wasserdichten Umhüllung, hindurchragen oder unter dieser angeordnet sein. Neben einem Ein- und Ausschalten können die Schalter auch für einen Wechsel zwischen unterschiedlichen Betriebsweisen der Signalisierungsvorrichtung verwendet werden.

Weitere Vorteile sind erzielbar, wenn bei einer erfindungsgemäßen Signalisierungsvorrichtung das Kontrollmodul ein elektrisches Speicherelement und ein Ladeelement für ein kontaktloses Laden des elektrischen Speicherelementes aufweist. Ein solches elektrisches Speicherelement kann beispielsweise ein Batterieelement, insbesondere eine aufladbares Batterieelement, aufweisen. Jedoch sind auch kapazitive Speicherelemente, zum Beispiel in Form von elektrischen Kondensatoren, im Rahmen der vorliegenden Erfindung denkbar. Wie bereits angesprochen, kann es vorteilhaft sein, wenn die gesamte Signalisierungsvorrichtung von einer Umhüllung, insbesondere einer wasserdichten Umhüllung, umgeben ist. In einer solchen Ausführungsform bringt es Vorteile mit sich, wenn ein kontaktloses Ladeelement ein kontaktloses Laden durch diese geschlossene und wasserdichte Umhüllung hindurch erlaubt. Insbesondere handelt es sich hier um ein induktives Ladeelement.

Ebenfalls von Vorteil ist es, wenn bei einer erfindungsgemäßen Signalisierungsvorrichtung das Kontrollmodul ein Kommunikationsmodul für eine drahtlose Kommunikation aufweist. Dabei handelt es sich insbesondere um eine energiearme Kommunikation, vorzugsweise um eine Kurzstreckenkommunikation. Beispielsweise kann hier eine Bluetooth Low Energy Kommunikation eingesetzt werden. Bei aufwendigeren Ausgestaltungsformen einer erfindungsgemäßen Signalisierungsvorrichtung sind jedoch auch komplexere und/oder energieintensivere Kommunikationen denkbar, wie beispielsweise WLAN-Verbindungen oder Mobilfunkverbindungen. Die Reduktion auf eine energiearme drahtlose Kommunikation führt jedoch zu einer Reduktion der Kosten und des Gewichts der Signalisierungsvorrichtung, da eine kleinere elektrische Speichereinheit ausreicht und/oder eine verlängerte Betriebsdauer ermöglicht werden kann. Die drahtlose Kommunikation dient dazu, zum einen mit beispielsweise einem Mobilfunkgerät als Gegenkommunikationsmittel zu kommunizieren, um ein Kalibrieren, Einrichten oder ein Update der Software auf der Signalisierungsvorrichtung zu ermöglichen. Zusätzlich oder alternativ kann mithilfe dieser drahtlosen Kommunikation auch ein Datenaustausch mit einer weiteren Signalisierungsvorrichtung, welche beispielsweise am gegenüberliegenden Oberarm des Fahrers angeordnet ist, erfolgen. Nicht zuletzt können auf diese Weise auch drahtlose Datenaustauschmöglichkeiten mit weiteren Fahrzeugen, dem eigenen Fahrzeug oder anderen Verkehrsteilnehmern zur Verfügung gestellt werden.

Einen weiteren Vorteil kann man erzielen, wenn bei einer erfindungsgemäßen Signalisierungsvorrichtung das Kontrollmodul wenigstens eines der folgenden Sensorelemente aufweist:
- Distanzsensor,
- Beschleunigungssensor,
- Gyrosensor,
- Totwinkelsensor,
- Lichtsensor
- Magnetsensor,
- Befestigungssensor.

Bei der voranstehenden Aufzählung handelt es sich um eine nicht abschließende Liste. Die Beschleunigungssensoren und/oder die Gyrosensoren sind vorzugweise zumindest einachsig, insbesondere zweiachsig, bevorzugt dreiachsig ausgebildet, wobei die einzelnen Achsen vorzugsweise senkrecht aufeinander stehen und in der dreiachsigen Ausgestaltungsform ein kartesisches Koordinatensystem ausbilden. Mithilfe eines Distanzsensors und/oder eines Totwinkelsensors ist es möglich, eine zusätzliche Funktionalität zu integrieren. Neben der Aussendung eines entsprechenden Lichtsignals zur Signalisierung kann beispielsweise über ein Vibrationselement ein haptisches Feedback an den Fahrer gegeben werden, wenn innerhalb des toten Winkels ein Objekt erkannt wird. Dies erlaubt es, eine Totwinkelwarnung an den Fahrer weiterzugeben. Die Beschleunigungssensoren und/oder die Gyrosensoren sind vorzugsweise für die direkte oder indirekte Erkennung der gewünschten Geste und vorzugsweise auch für die Unterscheidung im Unterscheidungselement einsetzbar. Ein Lichtsensor kann beispielsweise dafür verwendet werden, die Helligkeit des Lichtsignals an die Umgebungssituation anzupassen. So wird beispielsweise bei einem besonders hellen Außenlicht eine besonders helle Aktivierung des Lichtsignals notwendig sein, um eine entsprechende Wahrnehmbarkeit in der Umgebung zu erzeugen. Bei dunklen Außenverhältnissen macht es Sinn eine entsprechend geringere Lichtstärke auszusenden, um ein Blenden anderer Verkehrsteilnehmer zu vermeiden. Ein Magnetsensor erlaubt eine Definition eines absoluten Koordinatensystems mit Bezug auf das Erdmagnetfeld. Insbesondere kann damit die Unterscheidungsgenauigkeit zwischen erwünschten und unerwünschten Gesten verbessert werden. Ein Befestigungssensor kann, beispielsweise in Form eines Näherungssensors, erkennen, ob eine Befestigung an einem Oberarm vorliegt oder nicht. Mittels dieser Information kann ein automatisches Aktivieren und/oder Deaktivieren der Signalisierungsvorrichtung erfolgen. Mithilfe der Sensoren sind insbesondere auch auf Basis unterschiedlicher Gesten und Bewegungen unterschiedliche Lichtsignale erzeugbar. Beispielsweise kann als Folge einer Armbewegung diese Geste zu einem blinkenden Abbiegesignal führen. Durch entsprechende Beschleunigungsparameter kann ein Abbremsen erkannt werden, welches als Geste für ein Bremssignal interpretierbar ist. Vorteile bringt es weiter mit sich, wenn bei einer erfindungsgemäßen Signalisierungsvorrichtung das Kontrollmodul ein Vibrationselement aufweist für eine Ausgabe eines Vibrationssignals und/oder eine Akustikelement für die Ausgabe eines Akustiksignals an den Fahrer. Beispielsweise kann ein solches Vibrationssignal den Hinweis auf ein Objekt im toten Winkel geben, wie dies im voranstehenden Absatz bereits erläutert worden ist. Jedoch sind auch andere haptische Feedbacksignale denkbar, wie beispielsweise die Information über das Einschalten und/oder das Ausschalten der Signalisierungsvorrichtung. Auch kann ein haptisches Feedback die Erkennung einer Geste dem Fahrer zurückmelden, sodass dieser auch ohne das optische Erkennen des erzeugten Lichtsignals erkennt, dass diese Geste richtig erkannt worden ist. Auch kann auf diese Weise das Ende der Erzeugung, also der Stop der Ausgabe des Lichtsignals, an den Fahrer zurückgemeldet werden. Vorzugsweise ist das Vibrationssignal dabei spezifisch für die jeweils zurückgegebene Information und/oder die entsprechende Art des erzeugten Lichtsignals an den Fahrer. Ein solches Vibrationsmodul kann auch an einem dem Kontrollmodul entgegengesetzten Ende der Signalisierungsvorrichtung angeordnet sein. Dies verbessert insbesondere die Anordnung, da zum Beispiel bei der Anwendung eines Schnappbandes für den Befestigungsabschnitt das Vibrationsmodul automatisch in direkten Kontakt mit dem Oberarm des Fahrers gelangt. Zusätzlich oder alternativ kann das beschriebene Feedback auch mittels eines Akustiksignals ausgegeben werden.

Ebenfalls von Vorteil kann es sein, wenn bei einer erfindungsgemäßen Signalisierungsvorrichtung das Signalisierungselement eine Umhüllung aufweist, welche insbesondere auch das Kontrollmodul umgibt, welche vorzugsweise transparent und/oder teiltransparent ausgebildet ist. Diese Umhüllung kann beispielsweise wasserdicht ausgebildet sein und damit vorzugsweise die gesamte Signalisierungsvorrichtung gegen Spritzwasser oder sogar gegen Untertauchen schützen. Die Ausbildung in transparenter oder teiltransparenter Weise erlaubt es, die Signalisierungsmittel einfach und kostengünstig zu platzieren, da anschließend, beispielsweise in schlauchartiger Ausgestaltung, die Umhüllung über die Signalisierungsvorrichtung gezogen und anschließend geschlossen wird. Unter einer transparenten Ausbildung ist insbesondere eine vollständige transparent Ausbildung zu verstehen. Jedoch können selbstverständlich auch Farbfilter eingesetzt werden, welche als Teil dieser transparenten Ausgestaltung weiße LEDs mit unterschiedlichen Farbvarianten versehen. Damit wird die Flexibilität für unterschiedliche Farbvariationen trotz einheitlichem Einsatz weißer LEDs mit einer höheren Variabilität von unterschiedlichen Produktvarianten für die Signalisierungsvorrichtung möglich.

Darüber hinaus ist ein Gegenstand der vorliegenden Erfindung ein Signalisierungssystem, aufweisend wenigstens zwei erfindungsgemäße Signalisierungsvorrichtungen. Damit bringt ein erfindungsgemäßes Signalisierungssystem die gleichen Vorteile mit sich, wie sie ausführlich mit Bezug auf eine erfindungsgemäße Signalisierungsvorrichtung erläutert worden sind. Bevorzugt sind dabei die einzelnen Signalisierungsvorrichtungen identisch oder im Wesentlichen identisch ausgebildet. Die Signalisierungsvorrichtungen sind dafür ausgebildet, auf den beiden Oberarmen des Fahrers, also auf dessen linker und rechter Seite, angeordnet zu werden. Jedoch ist es grundsätzlich auch möglich, zusätzliche Signalisierungsvorrichtungen, beispielsweise an den Oberschenkeln, den Unterschenkeln oder aber auch an einem Rucksack des Fahrers, zu befestigen. Bei einem Signalisierungssystem mit wenigstens zwei Signalisierungsvorrichtungen werden insbesondere Signalisierungsvorrichtungen eingesetzt, welche für eine drahtlose Kommunikation untereinander ausgebildet sind.

Ein weiterer Gegenstand der vorliegenden Erfindung ist ein Erkennungsverfahren für die Erkennung einer Geste eines Oberarms eines Fahrers einer Signalisierungsvorrichtung gemäß der vorliegenden Erfindung, aufweisend die folgenden Schritte:
- Erfassen von Bewegungsparametern von Bewegungen des Oberarms mittels des wenigstens einen Sensorelements,
- Vergleich der erfassten Bewegungsparameter mit Signalisierungsgrenzwerten,
- Erzeugen des Lichtsignals auf Basis des Ergebnisses des Vergleichs.

Ein erfindungsgemäßes Erkennungsverfahren bringt damit die gleichen Vorteile mit sich, wie sie ausführlich mit Bezug auf eine erfindungsgemäße Signalisierungsvorrichtung erläutert worden sind. Im Allgemeinen ist es nun möglich, Bewegungsparameter mithilfe des Sensorelementes zu erfassen und anschließend auf Basis dieser Bewegungsparameter durch den Vergleich mit entsprechenden Signalisierungsgrenzwerten Gesten als gewünschte Gesten zu erkennen und als unerwünschte Gesten von unerwünschter Signalisierung zu unterscheiden. Das Lichtsignal wird also nur dann erzeugt, wenn der Vergleich ein Ergebnis einer gewünschten Geste ausgibt. Die Signalisierungsgrenzwerte sind dabei vorzugsweise spezifisch für den jeweiligen Bewegungsparameter, also einen Beschleunigungs-Bewegungsparameter, einen Gyro-Parameter oder einen Positions-Bewegungsparameter. Vorzugweise sind sowohl die Bewegungsparameter als auch die zugehörigen Signalisierungsgrenzwerte zusätzlich spezifisch zur jeweiligen Achsausrichtung des Messsensors beziehungsweise des bestimmten und erfassten Bewegungsparameters. Aus den erfassten Bewegungsparametern sind auch Rückschlüsse auf die Bewegungsrichtung und/oder die Beschleunigungsrichtung des Fahrzeugs möglich.

Bei der Ausführung des Erkennungsverfahrens auf einer erfindungsgemäßen Signalisierungsvorrichtung erfolgt der Schritt des Erfassens durch das Sensorelement, der Schritt des Vergleichs durch das Unterscheidungselement und der Schritt des Erzeugens durch das Signalisierungselement. Alle drei Schritte werden kontrolliert vom Kontrollmodul der Signalisierungsvorrichtung. Dabei können die einzelnen Elemente, insbesondere das Unterscheidungselement zumindest teilweise und/oder vollständig als Computerprogrammprodukt in das Kontrollmodul integriert sein.

Es ist nun möglich, mit einem erfindungsgemäßen Erkennungsverfahren Bewegungsparameter hinsichtlich ihres Ursprungs zuzuordnen und damit ihren Ursprung entweder einer aktiven Geste des Oberarms des Fahrers oder aber einem Fahreinfluss zuzuordnen. Bei Fahreinflüssen bedeutet dies, dass beispielsweise aus Straßenunebenheiten, Vibrationen oder Balancebewegungen des Fahrers unerwünschte Gesten erzeugt werden, welche durch den Vergleich der Bewegungsparameter mit den Signalisierungsgrenzwerten als unerwünscht definiert werden können.

Weiter ist es möglich, die Signalisierungsgrenzwerte direkt zu verändern. Die kann beispielsweise auf Basis von Trainingsdaten erfolgen, mittels welcher neue Modelle erstellt werden, die wiederum die Präzision des Erkennungsverfahrens spezifisch an den jeweiligen Fahrer anpassen. Dies kann alternativ oder zusätzlich zu der später noch erläuterten Verwendung von Unterscheidungsfiltern, Positionsparametern und/oder Gewichtungsparametern erfolgen.

Es ist noch darauf hinzuweisen, dass vorzugsweise die Erfassung interrupt-basiert erfolgt. Beispielsweise ist eine Messfrequenz beziehungsweise eine Erfassungsfrequenz oberhalb von 100 Hz denkbar. Selbstverständlich können auch zwei oder mehr Gesten für die gleiche Signalisierung angewendet werden. So kann beispielsweise eine klassische Abbiegeanzeige mit einem zur Seite gestreckten Arm eine erste Signalisierung eines Abbiegesignals zur Verfügung stellen, während eine andere Geste, mit der Hand am Lenker, ebenfalls die gleiche Signalisierung und damit die Erzeugung eines Abbiege-Lichtsignals auslöst. Zusätzlich ist es noch denkbar, dass die Bewegungsparameter weitere Informationen enthalten, beispielsweise eine Erkennung eines Sturzes oder eines Unfalls. Für einen solchen Fall kann zusätzlich ein Warmlichtsignal in Form eines Warnblinkers ausgegeben werden. Auch ist es denkbar, dass über eine drahtlose Kommunikation ein Notruf über ein verbundenes Mobiltelefon abgesetzt wird.

Vorteile bringt es mit sich, wenn bei einem erfindungsgemäßen Erkennungsverfahren die erfassten Bewegungsparameter mittels eines Unterscheidungsfilters gefiltert werden und anschließend in gefilterter Fassung dem Vergleich zugrunde gelegt werden. Darunter ist zu verstehen, dass auf Basis des vorhandenen Wissens über die normalen Fahrbewegungen diese herausgefiltert werden, noch bevor ein Vergleich mit dem Signalisierungsgrenzwert erfolgt. Dieser Unterscheidungsfilter kann beispielsweise ein fest eingestellter Unterscheidungsfilter sein, welcher zum Beispiel hohe Vibrationsfrequenzen als Fahreinflüsse automatisch herausfiltert. Der Unterscheidungsfilter kann auch variabel sein und beispielsweise als lernender oder selbstlernender Unterscheidungsfilter ausgebildet sein. Auch ist es möglich, dass besonders tiefe Frequenzen, insbesondere die Erdanziehungskraft, mithilfe eines Unterscheidungsfilters herausgefiltert werden. Dabei ist es unerheblich, ob unterschiedliche Filterfunktionen in einem gemeinsamen Unterscheidungsfilter oder in separaten Unterscheidungsfiltern angewendet werden. In Summe erlaubt dies einen Mess- und Interpretationszyklus im Bereich zwischen 6 und 8 ms. Die einzelnen Bewegungsparameter können dabei selbstverständlich einer mathematischen Bearbeitung unterliegen, sodass insbesondere eine Kurvendiskussion der Bewegungsparameter über die Zeit erfolgt. Dabei ist es möglich, die Steigung, die Krümmung und/oder die Wendepunkte solcher Bewegungsparameter und deren Verlauf über die Zeit zu berücksichtigen.

Vorteilhaft ist es ebenfalls, wenn bei einem erfindungsgemäßen Erkennungsverfahren zu Beginn des Verfahrens eine Erfassung von wenigstens einem Positionierungsparameter erfolgt, welcher insbesondere für zumindest eine der folgenden Positionierungen spezifisch ist:
- Positionierung am linken oder am rechten Oberarm des Fahrers,
- Positionierung bezüglich der Schwerkraft,
- Positionierung bezüglich des Fahrzeugs.

Bei der voranstehenden Aufzählung handelt es sich um eine nicht abschließende Liste. Die Positionierung am jeweiligen Oberarm erlaubt es, die unterschiedlichen Bewegungsparameter auf diese Positionierung abzustimmen. Auch können die Positionierungsinformationen bezüglich des Fahrzeugs, insbesondere resultierend aus der Sitz- oder Stehposition des Fahrers, eine Information über die Art des Fahrzeugs geben. Dies erlaubt es wiederum nun anschließend einfach oder in Kombination die Signalisierungsgrenzwerte und/oder den Unterscheidungsfilter auf Basis eines oder mehrerer Positionsparameter zu verändern. Auch können beispielsweise auf Basis einer Erkennung unterschiedlicher Fahrzeuge unterschiedliche Gesten und damit unterschiedliche Lichtsignale freigeschaltet und/oder gesperrt werden.

So ist es beispielsweise möglich, dass bei einem erfindungsgemäßen Erkennungsverfahren auf Basis des erfassten wenigstens einen Positionierungsparameters zumindest ein Signalisierungsgrenzwert und/oder ein Unterscheidungsfilter und/oder ein Gewichtungsparameter für zumindest eine Achse der Bewegungsparameter verändert wird. Es wird also möglich, die Positionierungsparameter als Einfluss auf den Signalisierungsgrenzwert, den Unterscheidungsfilter oder einen Gewichtungsparameter zu verwenden. Dies erlaubt es, die tatsächliche Unterscheidungsfunktion an eine aktuelle Umgebungssituation beziehungsweise Positionierungssituation anzupassen. Dieser Schritt kann auch als adaptive Kalibrierung verstanden werden und wird insbesondere unter Einsatz einer trainierten künstlichen Intelligenz durchgeführt. In Summe führt dies zu einer weiter verbesserten Unterscheidung zwischen gewünschten Gesten und unerwünschten Gesten. Auch ist es auf diese Weise möglich, zum Beispiel die Reduktion des Einflusses einer Achse, beispielsweise der Schwerkraftachse, zur Verfügung zu stellen, um zum Beispiel bei der Bremserkennung durch reduzierte Gewichtung bei der Auswertung eine verbesserte Unterscheidungskraft und damit eine erhöhte Sensitivität zur Verfügung zu stellen.

Ebenfalls von Vorteil kann es sein, wenn bei einem erfindungsgemäßen Erkennungsverfahren mittels eines Eingabeschrittes wenigstens ein Signalisierungsgrenzwert und/oder ein Unterscheidungsfilter und/oder ein Gewichtungsparameter angepasst wird. Darunter ist insbesondere eine manuelle Anpassung direkt an der Signalisierungsvorrichtung oder aber durch eine drahtlose Kommunikation verbunden an einer Mobileinheit, beispielsweise einem Smartphone, zu verstehen. Eine solche manuelle Konfiguration kann zum Beispiel das Ausschalten eines Signals oder das Setzen definierter Grenzwerte sein. Selbstverständlich sind als solche manuellen Eingabeschritte auch separate Gesten denkbar, wie beispielsweise das Ausschalten eines Signals bei falscher Aktivierung. Eine solche erkannte Fehlaktivierung und entsprechende Information durch die zugehörige Geste können gespeichert werden, sodass in Form eines selbstlernenden Systems diese Eingabe eine Weiterentwicklung der Unterscheidungsfähigkeit mit sich bringt. Auch ist eine Eingabe von einem separaten Fahrzeug oder dem bewegten Fahrzeug grundsätzlich denkbar.

Weiter von Vorteil kann es sein, wenn bei einem erfindungsgemäßen Erkennungsverfahren beim Aktivieren und/oder beim Deaktivieren des Kontrollmoduls ein spezifisches Lichtsignal über das Signalisierungselement ausgegeben wird, insbesondere beinhaltend eine Information über einen elektrischen Ladungszustand. Während grundsätzlich diese Ausgabe möglich ist, um anzuzeigen, dass die Signalisierungsvorrichtung nun im aktivierten Zustand oder im deaktivierten Zustand vorliegt, kann die Information über den Ladungszustand eine weitere Verbesserung mit sich bringen. So kann beispielsweise durch Blinken bei niedrigem Akkustand der Benutzer und damit der Fahrer aufgefordert werden einen Ladevorgang durchzuführen. Auch kann beispielsweise bei einer Vielzahl von Signalisierungselementen eine balkenförmige Anzeige die prozentuale Ladungssituation dem Fahrer mitteilen.

Vorteile bringt es ebenfalls mit sich, wenn bei einem erfindungsgemäßen Erkennungsverfahren die Art und/oder die Richtung des erzeugten Lichtsignals in Abhängigkeit einer erkannten und/oder vorgegebenen Positionierung der Signalisierungsvorrichtung erfolgt. So kann beispielsweise ein Abbiegesignal in Form eines Blinksignals nur zur Seite und/oder nur nach hinten ausgegeben werden. Ein Bremslicht ist vorzugsweise nur nach hinten gerichtet und kann bei einer Vollbremsung nach hinten ein Blinklichtsignal aussenden. Auch ist es denkbar, dass ein Blinken im Bereich des toten Winkels vermieden wird, um eine Eigenblendung zu reduzieren. Vorteilhaft ist es weiter, wenn bei einem erfindungsgemäßen Erkennungsverfahren bei einer Anwendung auf ein Signalisierungssystem gemäß der vorliegenden Erfindung die Kontrollmodule der Signalisierungsvorrichtung miteinander kommunizieren und insbesondere die erzeugten Lichtsignale aufeinander abstimmen und/oder die erfassten Bewegungsparameter auf Plausibilität prüfen. Beispielsweise ist eine zeitliche Korrelation des Blinkens und/oder eine zeitliche Abstimmung des Signalisierungsstarts bei konstantem Bremslicht im Bremsmodus denkbar. Auch kann sichergestellt werden, dass beim Abbiegeblinken immer nur eine Seite tatsächlich ein Lichtsignal ausgibt. Nicht zuletzt wird es möglich durch die doppelt vorhandene Sensorik die Plausibilität einzelner Bewegungsparameter zu prüfen. So kann beispielsweise ein Bewegungsparameter, welcher von beiden Signalisierungsvorrichtungen wahrgenommen wird, als unerwünschte Geste interpretiert werden, da eine gewünschte Abbiegegeste üblicherweise nur von einem einzigen Oberarm alleine ausgeführt wird.

Ebenfalls von Vorteil ist es, wenn bei einem erfindungsgemäßen Erkennungsverfahren auf Basis der Bewegungsparameter eine Ausschaltbewegung und/oder eine Einschaltbewegung erfasst wird und anschließend das Kontrollmodul ausgeschaltet und/oder eingeschaltet wird. Beispielsweise kann beim Anheben oder beim Abnehmen vom Arm dieses als entsprechende Bewegung interpretiert werden. Auch ein Einrollen in einen Packzustand für den Befestigungsabschnitt kann eine solche Bewegung sein. Der ausgeschaltete Zustand ist dabei vorzugsweise ein sogenannter Super Low Power Zustand, welcher grundsätzlich eine Einschaltbewegung oder eine Aktivierung mithilfe von Knöpfen erkennen kann.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Signalisierungsvorrichtung,
- Fig. 2: die Ausführungsform der Figur 1 in Seitenansicht,
- Fig. 3: eine weitere Ausführungsform einer erfindungsgemäßen Signalisierungsvorrichtung im schematischen Querschnitt,
- Fig. 4: eine weitere Ausführungsform einer erfindungsgemäßen Signalisierungsvorrichtung im schematischen Querschnitt,
- Fig. 5: eine mögliche Ausbildung von Bewegungsparametern,
- Fig. 6: eine mögliche Anwendung eines Unterscheidungsfilters,
- Fig. 7: eine mögliche Anwendung von Positionierungsparametern,
- Fig. 8: eine mögliche Anwendung von Gewichtungsparametern und
- Fig. 9: eine schematische Darstellung eines Signalisierungssystems.

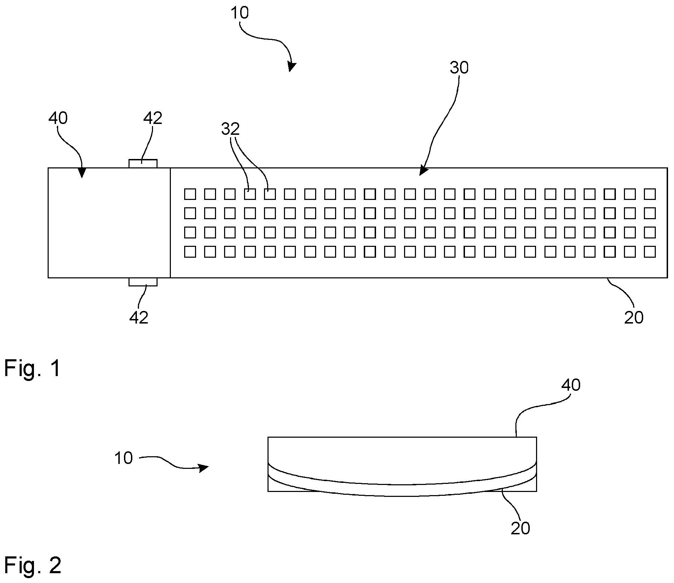

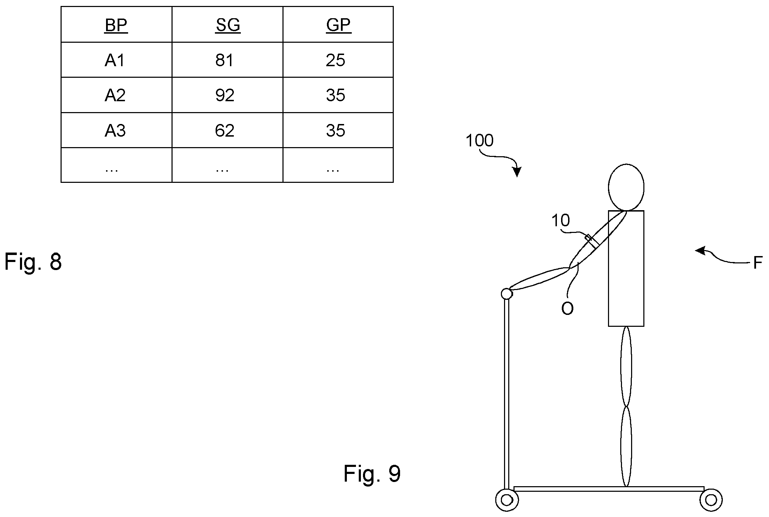

Erfindungsgemäß ist eine Signalisierungsvorrichtung 10 beispielsweise in der Figur 1 dargestellt. Die Signalisierungsvorrichtung 10 weist hier eine längliche Erstreckung von links nach rechts auf, wobei sie die Haupterstreckung aus dem Befestigungsabschnitt 20 zusammensetzt. Die Figur 2 zeigt eine entsprechende Draufsicht von der linken Seite, sodass die gekrümmte Ausgestaltung des Befestigungsabschnitts 20 deutlich wird. Durch diese gekrümmte Ausgestaltung eines Metallschnappbandes als Befestigungsabschnitt 20 kann eine Schnappbefestigung als reversible Befestigung am Oberarm O des Fahrers F erfolgen, wie dies beispielsweise in der Figur 9 dargestellt ist.

Die Figur 1 zeigt darüber hinaus einen starren Gehäuseabschnitt, welcher das Kontrollmodul 40 umfasst. In diesem Kontrollmodul 40 sind hier auf der Oberseite und Unterseite des zugehörigen Gehäuses des Kontrollmoduls 40 entsprechende Schalter 42 vorgesehen, welche mittels eines Zeigefinger und Daumen des Fahrers F beide gleichzeitig gedrückt werden können. Auf diese Weise ist es möglich, das Kontrollmodul 40 ein- und auszuschalten. Weiter zeigt die Figur 1, wie eine Vielzahl von einzelnen Signalisierungsmitteln 32 in Form von LEDs matrixförmig als Signalisierungselement 30 auf der Oberfläche des Befestigungsabschnitts 20 angeordnet sind. Diese einzelnen LEDs als Signalisierungsmittel 32 können vorzugsweise einzeln angesteuert werden, sodass Blinksignale, Laufsignale oder Dauerleuchtsignale als Lichtsignale durch ein erfindungsgemäßes Verfahren erzeugbar sind. Insbesondere sind diese Signalisierungsmittel 32 mehrfarbig ausgestaltet, sodass nicht nur eine einzige Farbe als Lichtsignal, sondern auch Farbunterschiede erzeugbar sind.

Eine Ausführungsform einer Signalisierungsvorrichtung 10 gemäß der Figuren 1 und 2 kann vom Fahrer F im Bereich des Gehäuses des Kontrollmoduls 40 gegriffen werden. Anschließend kann durch eine Bewegung auf den Oberarm O des Fahrers F die Vorspannung des Befestigungsabschnitts 20 gelöst. Die entsprechend sich einstellende Bewegung als Schnapp-Befestigungsbewegung legt nun den Befestigungsabschnitt 20 um den Oberarm O des Fahrers F. Bei dünnen Oberarmen O kommt dabei ein Teil des Befestigungsabschnitts 20, insbesondere das rechte Ende des Befestigungsabschnitts 20, auf der Außenseite oder der Innenseite des Kontrollmoduls 40 beziehungsweise des entsprechenden Gehäuses zum Liegen. Innerhalb des Kontrollmoduls 40 sind dabei die später noch erläuterten Einzelelemente und Einzelmodule angeordnet.

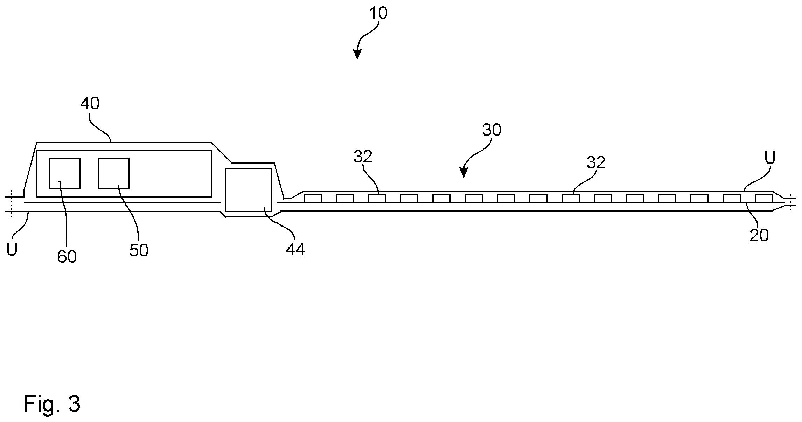

Die Figur 3 zeigt schematisch einen Querschnitt durch eine Signalisierungsvorrichtung 10. Hier ist wieder gut zu erkennen, dass eine längliche Erstreckung des Befestigungsabschnitts 20, insbesondere in Form eines Schnappbandes vorgesehen ist. Auf der Oberseite sind wieder eine Vielzahl von Signalisierungsmitteln 32 als Signalisierungselement 30 vorgesehen, welche vorzugsweise wieder als LED ausgestaltet sind. Das gesamte System der Signalisierungsvorrichtung 10 ist hier mit einer Umhüllung U umgeben, an deren Enden, insbesondere durch Verschweißen, ein wasserdichter Abschluss im Inneren der Umhüllung U vorgesehen werden kann. Damit kann die Signalisierungsvorrichtung 10 wasserdicht abgeschlossen werden und auch unter widrigen Umgebungsbedingungen, wie beispielsweise im Regen, verwendet werden. Die Umhüllung U ist dabei vorzugsweise schlauchartig ausgebildet, um die Montage zu erleichtern.

In der Figur 3 ist darüber hinaus ein Vibrationselement 44 dargestellt, welches ebenfalls vom Kontrollmodul 40 angesteuert werden kann. Dieses Vibrationsmodul 44 ist in der Lage, ein Vibrationssignal zu erzeugen, welches durch direkte Kontaktierung des Oberarms O an der Unterseite der Signalisierungsvorrichtung 10 in dem befestigten Zustand ein Feedback an den Fahrer F weitergeben kann. Weiter ist in der Figur 3 noch zu erkennen, dass im Inneren des Kontrollmoduls 40 ein Sensorelement 50 sowie ein Unterscheidungselement 60 vorgesehen sind, um ein erfindungsgemäßes Verfahren mit den genannten Vorteilen ausführen zu können.

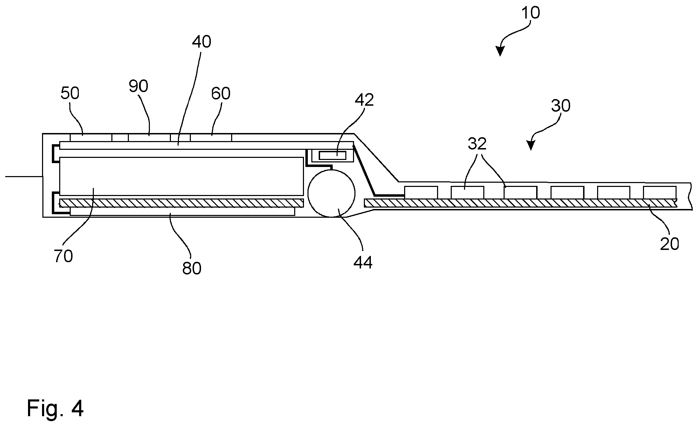

Die Figur 4 zeigt nochmals detaillierter, wie ein Kontrollmodul 40 aufgebaut sein kann. Hier sind insbesondere auch die elektrischen Verbindungen dargestellt, welche beispielsweise aus der als Platine ausgestalteten Form des Kontrollmoduls 40 ausgehen können. So ist hier ein metallisches beziehungsweise blechartiges Ausgestalten des Befestigungsabschnitts 20 vorgesehen, welcher vorzugweise die Schnappbefestigung aufweist, wie sie bereits erläutert worden ist. Ein relativ großes elektrisches Speicherelement 70 ist hier als Batterievorrichtung integriert, um das System beziehungsweise die Signalisierungsvorrichtung 10 mit Strom zu versorgen. Um die elektrische Speichervorrichtung 70 aufzuladen, ist hier ein kontaktloses Laden möglich. Ein solches kontaktloses Laden, beispielsweise über induktive Ladezyklen, ist hier mit dem Ladeelement 80 möglich, welches auf der Unterseite und damit außerhalb des metallischen Grundkonstruktes des Befestigungsabschnitts 20 zur Verfügung gestellt wird. Wird eine solche Signalisierungsvorrichtung 10 mit dem Ladeelement 80 an der Unterseite auf ein induktives Ladegerät gelegt, so kann der Ladevorgang zum Aufladen des elektrischen Speicherelements 70 starten.

Die Figur 4 zeigt weiter, dass das Kontrollmodul 40 vorzugsweise als Platine ausgebildet ist. Auf der Oberseite dieses Kontrollmoduls 40 in Form einer Platine können einzelne Elemente angeordnet sein, wie dies zum Beispiel das Sensorelement 50 und/oder das Unterscheidungselement 60 sind. Insbesondere kann das Unterscheidungselement 60 dabei in eine entsprechende Recheneinheit integriert sein. Darüber hinaus ist auf der Oberseite noch ein Kommunikationsmodul 90 vorgesehen, welches hier in der Lage ist eine drahtlose Kommunikation, insbesondere eine energiearme drahtlose Kommunikation, durchzuführen. So kann es sich beispielsweise um ein Bluetooth Modul, insbesondere um ein Bluetooth Low Energy Modul handeln. Über eine signalisierungstechnische Kopplung ist das Kontrollmodul 40 nun rechts mit dem Signalisierungselement 30 in Form der Signalisierungsmittel 32 verbunden und kann diese vorzugsweise einzeln ansteuern. Dies erlaubt es, Lichtsignale, Dauerlichtsignale, Wechsellichtsignale oder auch unterschiedlich variierende Farblichtsignale, je nach Bauweise der einzelnen Signalisierungsmittel 32, zu erzeugen.

Abschließend ist in der Ausführungsform der Figur 4 ebenfalls ein Vibrationselement 44 vorgesehen, welches durch die feste Struktur des Befestigungsabschnitts 20 hindurchragt und dementsprechend bei der Befestigung am Oberarm O des Fahrers F in direkten Kontakt mit dem Oberarm O gelangt. Ausschließlich eine Umhüllung U, welche beispielsweise eine flexible Umhüllung U sein kann, liegt zum wasserdichten Abschluss zwischen dem Oberarm O und dem Vibrationselement 44. Die bereits angesprochenen Vibrationssignale können auf diese Weise an einen Fahrer F weitergegeben werden.

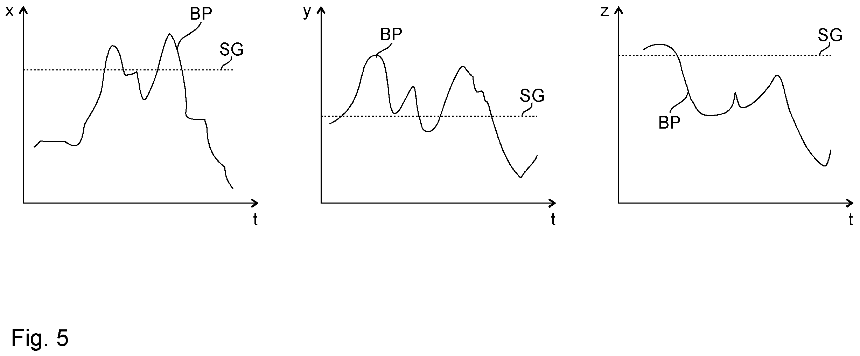

In Figur 5 ist schematisch dargestellt, wie ein Sensorelement 50 in Form eines Beschleunigungssensors in drei Achsen Bewegungsparameter BP aufnehmen kann. Diese Bewegungsparameter BP sind hier entlang der X-Achse, der Y-Achse und der Z-Achse über die Zeit aufgeführt. Für jeden dieser Bewegungsparameter BP sind hier unterschiedliche Signalisierungsgrenzwerte SG vorgesehen, welche vorzugsweise alle gemeinsam, also zeitlich gleichzeitig überschritten oder unterschritten sein müssen, um zur Erkennung einer gewollten Geste, zu führen. Selbstverständlich können diese Signalisierungsgrenzwerte fest vorgegeben, aber auch, wie dies bereits erläutert worden ist, variabel ausgestaltet sein.

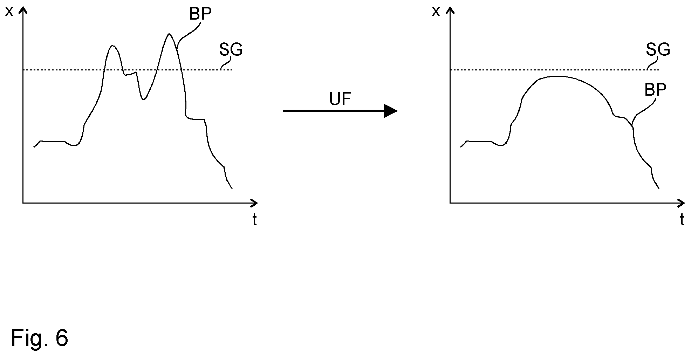

In der Figur 6 ist die Anwendung eines Unterscheidungsfilters UF dargestellt. So ist es beispielsweise möglich, dass bei besonders hohen Frequenzen in der Wahrnehmung von Beschleunigungen oder Gyro-Parametern als Bewegungsparameter BP auf Basis von Vibrationen des Fahrzeugs oder Straßenunebenheiten herrühren. Um zu vermeiden, dass solche Fahreinflüsse und Störfaktoren eine möglicherweise unerwünschte Geste fälschlicherweise erkennen, kann der Unterscheidungsfilter UF, beispielsweise hohe Frequenzen, herausfiltern. In der Figur 6 führt dies dazu, dass durch die Bearbeitung des Eingangssignals des Bewegungsparameters BP sich dieses verändert und nach der Filterung nun den gleichgebliebenen Signalisierungsgrenzwert SG nicht mehr überschreitet. Dies zeigt deutlich, dass bei bekannten Lösungen in diesem Fall eine Geste erkannt worden wäre, während durch die Anwendung eines Unterscheidungsfilter UF im vorliegenden Fall diese falsche Geste nicht erkannt wird und dementsprechend auch nicht fälschlicherweise ein Lichtsignal erzeugt wird.

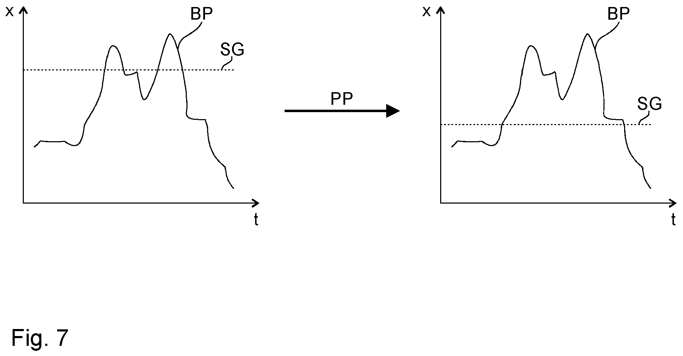

Figur 7 zeigt, wie die Positionierungsparameter PP eingesetzt werden können. Hier bleibt das Signal des Bewegungsparameters BP gleich, jedoch führt ein Positionierungsparameter PP, beispielsweise herrührend aus der Positionierung nach oben oder nach unten beziehungsweise am linken oder am rechten Oberarm O des Fahrers dazu, dass der Signalisierungsgrenzwert SG reduziert wird. Dementsprechend ändert sich auch die Auswertung beziehungsweise die Interpretation des gleich gebliebenen Verlaufs des Bewegungsparameters BP. Es ist auch darauf hinzuweisen, dass selbstverständlich eine Anpassung des Signalisierungsgrenzwerts SG und auch eine Anwendung eines Unterscheidungsfilters UF miteinander kombiniert werden können.

Die Figur 8 zeigt noch, wie unterschiedliche Signalisierungsgrenzwerte SG beziehungsweise deren Überschreiten oder Unterschreiten noch gewichtet werden können. So können hier unterschiedliche Bewegungsparameter BP, dargestellt schematisch durch A1, A2 und A3, unterschiedliche Signalisierungsgrenzwerte SG aufweisen. Diese unterschiedlichen Signalisierungsgrenzwerte SG werden hier unterschiedlich stark gewichtet, sodass dementsprechend ihr Überschreiten oder Unterschreiten in unterschiedlicher Weise in die Auswertung und Interpretation einfließen kann.

Die Figur 9 zeigt, wie ein oder mehrere Signalisierungsvorrichtungen 10 am Oberarm O eines Fahrers F eines Fahrzeugs angeordnet sind. Bei dieser Ausführungsform ist das Signalisierungssystem 100 aus zwei Signalisierungsvorrichtungen 10 aufgebaut, welche insbesondere identisch ausgestaltet sind. Diese unterschiedlichen und einzelnen Signalisierungsvorrichtungen 10 sind dabei jeweils eins am linken und eins am rechten Oberarm O des Fahrers F befestigt.

Die voranstehende Erläuterung der Ausführungsformen beschreibt die vorliegende Erfindung ausschließlich im Rahmen von Beispielen.

### Bezugszeichenliste

- 10: Signalisierungsvorrichtung
- 20: Befestigungsabschnitt
- 30: Signalisierungselement
- 32: Signalisierungsmittel
- 40: Kontrollmodul
- 42: Schalter
- 44: Vibrationselement
- 50: Sensorelement
- 60: Unterscheidungselement
- 70: elektrisches Speicherelement
- 80: Ladeelement
- 90: Kommunikationsmodul

- 100: Signalisierungssystem

- U: Umhüllung

- F: Fahrer
- O: Oberarm

- BP: Bewegungsparameter
- PP: Positionierungsparameter
- GP: Gewichtungsparameter
- SG: Signalisierungsgrenzwert
- UF: Unterscheidungsfilter

## Patentansprüche

1. Signalisierungsvorrichtung (10) für die Erzeugung eines Lichtsignals beim Fahren eines Fahrzeugs, aufweisend einen Befestigungsabschnitt (20) für eine reversible Befestigung an einem Oberarm (O) eines Fahrers (F) des Fahrzeugs und ein Signalisierungselement (30) mit einer Vielzahl von Signalisierungsmitteln (32) zur Erzeugung des Lichtsignals, weiter aufweisend ein Kontrollmodul (40) zur Kontrolle des Signalisierungselements (30) mit wenigstens einem Sensorelement (50) zur Erfassung von Gesten des Oberarms (O) des Fahrers (F), wobei das Kontrollmodul (40) weiter ein Unterscheidungselement (60) aufweist für eine Unterscheidung der erkannten Gesten des Oberarms (O) des Fahrers (F) von Fahrbewegungen des Fahrers (F) beim Fahren des Fahrzeugs, um eine gewollte Geste zu erkennen und anschließend das Lichtsignal auszugeben, wobei die Signalisierungsmittel (32) wenigstens teilweise, insbesondere vollständig oder im Wesentlichen vollständig auf dem Befestigungsabschnitt (20) angeordnet sind.

2. Signalisierungsvorrichtung (10) nach Anspruch 1, **dadurch gekennzeichnet, dass** der Befestigungsabschnitt (20) wenigstens abschnittsweise als federnde Schnappbefestigung ausgebildet ist.

3. Signalisierungsvorrichtung (10) nach einem der vorangehenden Ansprüche, **dadurch gekennzeichnet, dass** das Kontrollmodul (40) an einem Ende des Befestigungsabschnitts (20) angeordnet ist.

4. Signalisierungsvorrichtung (10) nach einem der vorangehenden Ansprüche, **dadurch gekennzeichnet, dass** das Kontrollmodul (40) wenigstens eines der folgenden Sensorelemente (50) aufweist:
- Distanzsensor
- Beschleunigungssensor
- Gyrosensor
- Totwinkelsensor
- Lichtsensor
- Magnetsensor
- Befestigungssensor; und/oder
**dass** das Kontrollmodul (40) ein Vibrationselement (44) für eine Ausgabe eines Vibrationssignals und/oder eine Akustikelement für die Ausgabe eines Akustiksignals an den Fahrer (F) aufweist.

5. Signalisierungssystem (100), aufweisend wenigstens zwei Signalisierungsvorrichtungen (10) mit den Merkmalen eines der Ansprüche 1 bis 4.

6. Erkennungsverfahren für die Erkennung einer Geste eines Oberarms (O) eines Fahrers (F) durch eine Signalisierungsvorrichtung (10) mit den Merkmalen eines der Ansprüche 1 bis 4, aufweisend die folgenden Schritte:
- Erfassen von Bewegungsparametern (BP) von Bewegungen des Oberarms (O) mittels dem wenigstens einen Sensorelement (50),
- Vergleich der erfassten Bewegungsparameter (BP) mit Signalisierungsgrenzwerten (SG), wobei die Signalisierungsgrenzwerte (SG) spezifisch für den jeweiligen Bewegungsparameter (BP) sind, und
- Erzeugen des Lichtsignals auf Basis des Ergebnisses des Vergleichs, wenn die Geste im Vergleich als gewünschte Geste erkannt wird.

7. Erkennungsverfahren nach Anspruch 6, **dadurch gekennzeichnet, dass** die erfassten Bewegungsparameter (BP) mittels eines Unterscheidungsfilters (UF) gefiltert werden, und anschließend in gefilterter Fassung dem Vergleich zugrunde gelegt werden.

8. Erkennungsverfahren nach einem der Ansprüche 6 oder 7, **dadurch gekennzeichnet, dass** zu Beginn des Verfahrens eine Erfassung von wenigstens einem Positionierungsparameter (PP) erfolgt, welcher insbesondere für zumindest eine der folgenden Positionierungen spezifisch ist:
- Positionierung am linken oder am rechten Oberarm (O) des Fahrers (F)
- Positionierung bezüglich der Schwerkraft
- Positionierung bezüglich des Fahrzeugs.

9. Erkennungsverfahren nach Anspruch 8, **dadurch gekennzeichnet, dass** auf Basis des erfassten wenigstens einen Positionierungsparameters (PP) zumindest ein Signalisierungsgrenzwert (SG) und/oder ein Unterscheidungsfilter (UF) und/oder ein Gewichtungsparameter (GP) für zumindest eine Achse der Bewegungsparameter (BP) verändert wird.

10. Erkennungsverfahren nach einem der Ansprüche 6 bis 9, **dadurch gekennzeichnet, dass** mittels eines Eingabeschrittes wenigstens ein Signalisierungsgrenzwert (SG) und/oder ein Unterscheidungsfilter (UF) und/oder ein Gewichtungsparameter (GP) angepasst wird.

11. Erkennungsverfahren nach einem der Ansprüche 6 bis 10, **dadurch gekennzeichnet, dass** beim Aktivieren und/oder beim Deaktivieren des Kontrollmoduls (40) ein spezifisches Lichtsignal über das Signalisierungselement (30) ausgegeben wird, insbesondere beinhaltend eine Information über einen elektrischen Ladungszustand.

12. Erkennungsverfahren nach einem der Ansprüche 6 bis 11, **dadurch gekennzeichnet, dass** die Art und/oder die Richtung des erzeugten Lichtsignals in Abhängigkeit einer erkannten und/oder vorgegebenen Positionierung der Signalisierungsvorrichtung (10) erfolgt.

13. Erkennungsverfahren nach einem der Ansprüche 6 bis 12, **dadurch gekennzeichnet, dass** bei einer Anwendung auf ein Signalisierungssystem (100) mit den Merkmalen des Anspruchs 6 die Kontrollmodule (40) der Signalisierungsvorrichtungen (10) miteinander kommunizieren und insbesondere die erzeugten Lichtsignale aufeinander abstimmen und/oder die erfassten Bewegungsparameter (BP) auf Plausibilität prüfen.

14. Erkennungsverfahren nach einem der Ansprüche 6 bis 13, **dadurch gekennzeichnet, dass** auf Basis der Bewegungsparameter (BP) eine Ausschaltbewegung und/oder eine Einschaltbewegung erfasst wird und anschließend das Kontrollmodul (40) ausgeschaltet und/oder eingeschaltet wird.

## Claims

1. Signalling device (10) for generating a light signal when riding a vehicle, comprising a fastening section (20) for reversible fastening to an upper arm (O) of a rider (F) of the vehicle and a signalling element (30) having a plurality of signalling means (32) for generating the light signal, further comprising a control module (40) for controlling the signalling element (30), with at least one sensor element (50) for detecting gestures of the upper arm (O) of the rider (F), wherein the control module (40) further comprises a distinguishing element (60) for distinguishing the detected gestures of the upper arm (O) of the rider (F) from riding movements of the rider (F) when riding the vehicle, in order to detect an intended gesture and subsequently output the light signal, wherein the signalling means (32) are arranged at least partially, in particular completely or substantially completely, on the fastening section (20).

2. Signalling device (10) according to claim 1, **characterised in that** the fastening section (20) is configured at least in sections as a resilient snap fastening.

3. Signalling device (10) according to any one of the preceding claims, **characterised in that** the control module (40) is arranged at one end of the fastening section (20).

4. Signalling device (10) according to any one of the preceding claims, **characterised in that** the control module (40) comprises at least one of the following sensor elements (50):
- distance sensor
- acceleration sensor
- gyroscopic sensor
- blind-spot sensor
- light sensor
- magnetic sensor
- fastening sensor; and/or
**that** the control module (40) comprises a vibration element (44) for outputting a vibration signal and/or an acoustic element for outputting an acoustic signal to the rider (F).

5. Signalling system (100), comprising at least two signalling devices (10) having the features of any one of claims 1 to 4.

6. Detection method for detecting a gesture of an upper arm (O) of a rider (F) by means of a signalling device (10) having the features of any one of claims 1 to 4, comprising the following steps:
- detecting movement parameters (BP) of movements of the upper arm (O) by means of the at least one sensor element (50),
- comparing the detected movement parameters (BP) with signalling threshold values (SG), wherein the signalling threshold values (SG) are specific to the respective movement parameter (BP), and
- generating the light signal on the basis of the result of the comparison when the gesture is recognised in the comparison as a desired gesture.

7. Detection method according to claim 6, **characterised in that** the detected movement parameters (BP) are filtered by means of a distinguishing filter (UF) and are subsequently used, in filtered form, as the basis for the comparison.

8. Detection method according to either claim 6 or claim 7, **characterised in that** at the beginning of the method at least one positioning parameter (PP) is detected, which is in particular specific to at least one of the following positionings:
- positioning on the left or the right upper arm (O) of the rider (F)
- positioning relative to gravity
- positioning relative to the vehicle.

9. Detection method according to claim 8, **characterised in that** on the basis of the detected at least one positioning parameter (PP), at least one signalling threshold value (SG) and/or a distinguishing filter (UF) and/or a weighting parameter (GP) for at least one axis of the movement parameters (BP) is changed.

10. Detection method according to any one of claims 6 to 9, **characterised in that** at least one signalling threshold value (SG) and/or a distinguishing filter (UF) and/or a weighting parameter (GP) is adjusted by means of an input step.

11. Detection method according to any one of claims 6 to 10, **characterised in that** upon activation and/or deactivation of the control module (40), a specific light signal is output via the signalling element (30), in particular including information about an electrical state of charge.

12. Detection method according to any one of claims 6 to 11, **characterised in that** the type and/or the direction of the generated light signal is determined as a function of a detected and/or predefined positioning of the signalling device (10).

13. Detection method according to any one of claims 6 to 12, **characterised in that** when applied to a signalling system (100) having the features of claim 6, the control modules (40) of the signalling devices (10) communicate with one another and in particular coordinate the generated light signals with one another and/or check the detected movement parameters (BP) for plausibility.

14. Detection method according to any one of claims 6 to 13, **characterised in that** on the basis of the movement parameters (BP), a switch-off movement and/or a switch-on movement is detected and the control module (40) is subsequently switched off and/or switched on.

## Revendications

1. Dispositif de signalisation (10) destiné à générer un signal lumineux lors de la conduite d'un véhicule, comprenant une section de fixation (20) destinée à une fixation réversible à une partie supérieure du bras (O) d'un conducteur (F) du véhicule et un élément de signalisation (30) comprenant une pluralité de moyens de signalisation (32) destinés à générer le signal lumineux, comprenant en outre un module de commande (40) destiné à commander l'élément de signalisation (30), avec au moins un élément capteur (50) destiné à détecter des gestes de la partie supérieure du bras (O) du conducteur (F), le module de commande (40) comprenant en outre un élément de distinction (60) destiné à distinguer les gestes détectés de la partie supérieure du bras (O) du conducteur (F) des mouvements de conduite du conducteur (F) lors de la conduite du véhicule, afin de détecter un geste intentionnel puis d'émettre le signal lumineux, les moyens de signalisation (32) étant disposés au moins partiellement, en particulier complètement ou sensiblement complètement, sur la section de fixation (20).

2. Dispositif de signalisation (10) selon la revendication 1, **caractérisé en ce que** la section de fixation (20) est conçue au moins par endroits comme une fixation élastique par encliquetage.

3. Dispositif de signalisation (10) selon l'une quelconque des revendications précédentes, **caractérisé en ce que** le module de commande (40) est disposé à une extrémité de la section de fixation (20).

4. Dispositif de signalisation (10) selon l'une quelconque des revendications précédentes, **caractérisé en ce que** le module de commande (40) comporte au moins l'un des éléments capteurs (50) suivants :
- capteur de distance
- capteur d'accélération
- capteur gyroscopique
- capteur d'angle mort
- capteur de lumière
- capteur magnétique
- capteur de fixation ; et/ou
**en ce que** le module de commande (40) comporte un élément de vibration (44) destiné à émettre un signal de vibration et/ou un élément acoustique destiné à émettre un signal acoustique au conducteur (F).

5. Système de signalisation (100), comprenant au moins deux dispositifs de signalisation (10) présentant les caractéristiques de l'une quelconque des revendications 1 à 4.

6. Procédé de détection pour détecter un geste d'une partie supérieure du bras (O) d'un conducteur (F) au moyen d'un dispositif de signalisation (10) présentant les caractéristiques de l'une quelconque des revendications 1 à 4, comprenant les étapes suivantes :
- détection de paramètres de mouvement (BP) de mouvements de la partie supérieure du bras (O) au moyen dudit au moins un élément capteur (50),
- comparaison des paramètres de mouvement (BP) détectés avec des valeurs seuils de signalisation (SG), les valeurs seuils de signalisation (SG) étant spécifiques au paramètre de mouvement (BP) respectif, et
- génération du signal lumineux sur la base du résultat de la comparaison lorsque le geste est reconnu, lors de la comparaison, comme un geste souhaité.

7. Procédé de détection selon la revendication 6, **caractérisé en ce que** les paramètres de mouvement (BP) détectés sont filtrés au moyen d'un filtre de distinction (UF), puis sont utilisés, sous forme filtrée, comme base de la comparaison.

8. Procédé de détection selon la revendication 6 ou 7, **caractérisé en ce que** au début du procédé, au moins un paramètre de positionnement (PP) est détecté, lequel est notamment spécifique à au moins l'un des positionnements suivants :
- positionnement sur la partie supérieure du bras (O) gauche ou droite du conducteur (F)
- positionnement par rapport à la gravité
- positionnement par rapport au véhicule.

9. Procédé de détection selon la revendication 8, **caractérisé en ce que** sur la base dudit au moins un paramètre de positionnement (PP) détecté, au moins une valeur seuil de signalisation (SG) et/ou un filtre de distinction (UF) et/ou un paramètre de pondération (GP) pour au moins un axe des paramètres de mouvement (BP) sont modifiés.

10. Procédé de détection selon l'une quelconque des revendications 6 à 9, **caractérisé en ce que** au moyen d'une étape de saisie, au moins une valeur seuil de signalisation (SG) et/ou un filtre de distinction (UF) et/ou un paramètre de pondération (GP) sont adaptés.

11. Procédé de détection selon l'une quelconque des revendications 6 à 10, **caractérisé en ce que** lors de l'activation et/ou de la désactivation du module de commande (40), un signal lumineux spécifique est émis via l'élément de signalisation (30), comprenant notamment une information relative à un état de charge électrique.

12. Procédé de détection selon l'une quelconque des revendications 6 à 11, **caractérisé en ce que** le type et/ou la direction du signal lumineux généré sont déterminés en fonction d'un positionnement détecté et/ou prédéfini du dispositif de signalisation (10).

13. Procédé de détection selon l'une quelconque des revendications 6 à 12, **caractérisé en ce que** lors d'une application à un système de signalisation (100) présentant les caractéristiques de la revendication 6, les modules de commande (40) des dispositifs de signalisation (10) communiquent entre eux et, en particulier, coordonnent entre eux les signaux lumineux générés et/ou vérifient la plausibilité des paramètres de mouvement (BP) détectés.

14. Procédé de détection selon l'une quelconque des revendications 6 à 13, **caractérisé en ce que** sur la base des paramètres de mouvement (BP), un mouvement de désactivation et/ou un mouvement d'activation est détecté, puis le module de commande (40) est désactivé et/ou activé.
